# EUROPEAN PATENT SPECIFICATION

(11) **EP 3 818 012 B1**
(45) Date of publication and mention of the grant of the patent: **01.11.2023**
(21) Application number: 19749835.5
(22) Date of filing: 04.07.2019
(51) Int. Cl.: C02F 1/32, C02F 1/78

(54) **LIQUID TREATMENT SYSTEM**
FLÜSSIGKEITSBEHANDLUNGSSYSTEM
SYSTÈME DE TRAITEMENT DE LIQUIDE

(30) Priority: 05.07.2018 NL 2021257
(43) Date of publication of application: 12.05.2021
(73) Proprietor: Berson, Johannes Jacobus, 5175 WN Loon op Zand (NL)
(72) Inventor: Berson, Johannes Jacobus, 5175 WN Loon op Zand (NL)
(74) Representative: van Breda, Jacobus
(86) International application number: PCT/NL2019/050412
(87) International publication number: WO 2020/009575

(56) References cited:
- US-A- 4 204 956
- US-A- 4 230 571
- US-B1- 6 783 670

## Description

### FIELD OF THE INVENTION

The present invention is in the field of a liquid treatment system, the system comprising a treatment chamber and a liquid inlet and a liquid outlet connected to said treatment chamber, wherein the liquid is treated by an ultraviolet lamp unit for generating UV-light of a first wavelength for killing microorganisms and for generating UV-light of a second wavelength for providing ozone.

### BACKGROUND OF THE INVENTION

Only 2.5% of water on earth is fresh water and the vast majority of these are stored in the North and South Pole. It is therefore important to keep this fresh water fresh and that ensure that it remains suitable for reuse.

In German utility model no. 93.20.594.5 a plurality of ultra-violet (UV) lamps are disposed in the treatment chamber, wherein a fluid flowing through the treatment chamber, such as contaminated water, for example, is cleaned by means of the UV radiation emitted by said UV lamps.

In this prior art device the planes are pivotally connected near a first longitudinal side to a construction that can float on the water, whilst the second longitudinal side remote from said first longitudinal side rests on a bottom of the treatment chamber. When the water level in the treatment chamber rises, the construction will be moved in upward direction, with the planes taking up a different angle with respect to the bottom. The spacing between the planes slightly changes thereby.

The degree of contamination may be determined by the dosage of ultraviolet radiation to which the liquid particles are exposed. The radiation emitted by an ultraviolet lamp is considered to depend on the age of the lamp, however. Moreover, the question whether water flowing past a UV lamp at some distance therefrom is irradiated with UV light furthermore depends on the spacing between the lamps and the transmission value of the liquid.

A disadvantage of the above device is that in the case of a different transmission value of the liquid to be treated or of a reduced emission of UV light resulting from ageing of a lamp, only a limited change of the spacing between the planes can be effected, as a result of which not all liquid particles will be irradiated to a Sufficient degree and an optimum cleaning effect is not obtained.

The device recited in US 6,783, 670 B1, of the present inventor, overcomes some of the above disadvantages. The device is suitable for treating liquids, in particular contaminated water, which device comprises a treatment chamber and a liquid inlet and a liquid outlet connected to said treatment chamber, wherein a plurality of substantially parallel ultraviolet lamps are disposed in said treatment chamber, which ultraviolet lamps are arranged in substantially parallel planes and which are movable with respect to each other. However the device is still not effective enough. A disadvantage is for instance that the dosage required may vary significantly and it is difficult to correct for the required dosage. The capacity of such systems is also limited. Energy consumption is relatively high as well.

US 4,204,956 A recites a water purification system that employs a plurality of particularly arraigned ultra-violet lamps emitting high intensity germicidal ultra-violet radiation and radiation producing ozone in the tank through which water is passed with detectors monitoring lamp operation and ultra-violet radiation level throughout the tank for highly efficient purification of fluids passed through the tank. US 4,230,571 A recites a method and apparatus for the purification of water with ozone and ultraviolet radiation. Oxygen-containing gas, such as air, is directed to flow in a confined path past an ultraviolet radiation source, such as a mercury vapor lamp. The absorption of ultraviolet radiation by oxygen produces ozone which is entrained in the flowing gas. The gas is next mixed with the contaminated water and the mixture of water and ozone is then directed past the same ultraviolet source in a path isolated from the confined path of gas alone. The ozone in the water acts directly to kill bacteria and viruses and to oxidize undesirable compounds in the water. The ultraviolet radiation also acts directly to kill bacteria and viruses in the water. Additionally the ultraviolet radiation acts as a catalyst for the disinfecting and oxidizing action of the ozone, so that water purification occurs much faster than would occur if the ozone were acting alone.

The present invention therefore relates to a system for liquid treatment, which solves one or more of the above problems and drawbacks of the prior art, providing reliable results, without jeopardizing functionality and advantages.

### SUMMARY OF THE INVENTION

The present invention relates to system for liquid treatment, in particular waste water, referred to as UVOX FLEXBANK (UFB). The UVOX FLEXBANK system is a combination of an UVOX system, which is an integrated innovative technology, such as for an optimum land save closed water cycle in Mediterranean tourist facilities. Therein water in a closed system is irradiated by UV light, such as of 254 nm, for killing microorganisms and in which, oxygen is irradiated via the inside of a quartz tube, such as at 185 nm. O₂ is then converted into ozone. With a venturi an oxygen/ozone mixture may be provided and mixed with water, and optionally again with 254 nm irradiated. The UVOX FLEXBANK is designed to systems possible for larger capacities and to minimize energy consumption (UFB). This is achieved through an adjustable distance of the UV lamps that can be adapted simultaneously by switching series UV-lamps to a variable distance from each other. Also the UVOX lamps can be moved simultaneously in an open system. The quartz tubes thereof are closed on one side. Experiments have shown that, inter alia, by combining the UV and OX systems, together with optional addition of, for example, H₂O₂, this UVOX FLEXBANK system is suitable for treating large capacities of water up to 500 m³/h or more. Examples thereof are a treatment of purified waste water to make it suitable for use, e.g. irrigation, without chemicals being present, and a treatment of large swimming water batches, again without chemicals, or with minimal chlorine consumption. The present racks and lamps may be considered to provide openings or ports for passing water through.

Thereby the present invention provides a solution to one or more of the above mentioned problems and drawbacks.

Advantages of the present description are detailed throughout the description.

### DETAILED DESCRIPTION OF THE INVENTION

The present invention relates to a system according to claim 1.

In the present system series of ultraviolet lamps are each individually arranged in parallel planes substantially perpendicular to a wall of said treatment chamber.

In an exemplary embodiment of the present system the guiding unit may comprise at least one rail, preferably two rails. Therewith the present series may be moved parallel to walls of the chamber and a dosage may be varied accordingly.

In an exemplary embodiment of the present system each series may comprise a fixator for fixing the rack to the guiding unit. In large operations it is preferred to fix the present rack of lamps firmly.

In the present system each series comprises at least one ultraviolet lamp unit for generating UV-light of a first wavelength for killing microorganisms and for generating UV-light of a second wavelength for providing ozone, preferably 2-n units, more preferably 3-n units, such as 4-12 units, e.g. 5-8 units. Typically 2-50 series may be present, such as 4-20 series.

In an exemplary embodiment the present system may comprise a driver for moving the series with respect to each, such as a mechanical driver, a pneumatic driver, and a hydraulic driver. Therewith control of dosage is made easier.

In the present system UV-lamp units are provided in a substantially vertical mode.

In an exemplary embodiment of the present system at least one of a bank and a rack may comprise a second guiding unit for vertical movement, wherein the at least one of a bank and a rack may be loosely attached to the second guiding unit such that the at least one of a bank and a rack may float in the liquid. As such variation in water or liquid level are automatically compensated for. This prevents an effective use of the UVOX system and prevents overheating as well.

In an exemplary embodiment of the present system the first wavelength for killing microorganisms may be 254±20 nm, preferably 245±10 nm, more preferably 245±5 nm. It has been found that these wavelengths are very effective in killing microorganisms.

In an exemplary embodiment of the present system the second wavelength for providing ozone may be 185±20 nm, preferably 185±10 nm, more preferably 185±5 nm. It has been found that these wavelengths produce good quantities of ozone.

In the present system for at least one UV lamp unit an intensity of the first wavelength for killing microorganisms is adaptable between 0-100% of a maximum power capacity. As such, during operation, the intensity may be varied, such as in view of water to be treated and pollutants and microorganisms therein.

In the present system an intensity of the second wavelength for providing ozone is adaptable between 0-100% of a maximum power capacity. As such, during operation, the intensity may be varied, such as in view of water to be treated and pollutants and microorganisms therein.

In an exemplary embodiment the present system may comprise at least one hydrogen peroxide provision unit. It is found that hydrogen peroxide contributes to the cleaning process, in particular as an additional component.

In the present system a UV lamp unit comprises a transparent tube (10) closed at a bottom side thereof, preferably a quartz tube, a UV-lamp (11) for generating the first and second wavelength located in the quartz tube, preferably centrally located, an inner tube (12) located in the tube close to the UV-lamp for providing flow of a fluid, such as air, an injector (8) in fluid connection with the inner tube, such as a Venturi, the injector comprising a fluid exit for directing ozone rich gas to the to be treated liquid, and optionally a pump (13) in fluid connection with the injector, a temperature sensor, and an UV-intensity sensor.

In an exemplary embodiment of the present system the UV lamp unit may further comprise a common air block (9) in fluid connection with adjacent UV lamp units of a series of lamp units. It is found that with the common air block the control and adaptation of air is better controlled, as well as the design is simplified.

In an exemplary embodiment the present system may comprise at least one of an electrical power supply, an electronic control unit, and a UV-intensity detector. Therewith the dosage can be controlled precisely and adapted if required.

In the present system the series is placed in a rack (5). As such they may be provided and removed easily.

In an exemplary embodiment of the present system the system may comprise a filter system (1). In case of heavily polluted water or water containing small particles it is preferred to remove these, before further treating the water with the present system.

In an exemplary embodiment of the present system the liquid to be treated may be contaminated water, such as industrial waste water, household waste water, etc.

In an exemplary embodiment of the present system the flow speed of the to be treated water may be between 0.1-5 m/s, preferably 0.2-3 m/s, such as 0.5-1.2 m/s, and/or the number of racks may be from 2-10, and/or a number of lamps may be from 4-20, such as 5-12, and/or a flow channel width may be from 30-200 cm, such as 50-120 cm, and/or a depth of a flow channel may be from 20-120 cm.

The invention further relates to a use of a system according to the invention, for the treatment of water, such as of contaminated or waste water, wherein water is provided in an amount of 50-1000 m³/h, according to claim 15.

### EXAMPLES

The below relates to examples, which are not limiting in nature.

In an example the present system is operated in a flow channel with 6 rows of 10 lamps, each lamp having a width of about 33 mm. A flow speed of the water was maintained at about 0.5 m/s. A water level was found to decrease from a front lamp to a back lamp with approximately 30 mm.

It was found that with the present system in general and with the examples specifically more than 99.9% of the microorganisms were killed, or put different, less than 0.1% remained. The present system performed a factor 2-10, typically 5-8, better than comparable prior art systems. For instance Bact. Subtilis is killed 2-5 times more efficient. The present system thereto used a radiation dose of more than 25 mJ/cm² water, typically some 100 mJ/cm² water. In addition most of the chemicals, pesticides, agricultural spill overs, and medicaments, typically resent in waste water, were reduced significantly, typically between 30-90% or more.

The invention is further detailed by the accompanying figures, which are exemplary and explanatory of nature and are not limiting the scope of the invention. To the person skilled in the art it may be clear that many variants, being obvious or not, may be conceivable falling within the scope of protection, defined by the present claims.

### FIGURES

The invention although described in detailed explanatory context may be best understood in conjunction with the accompanying figures.

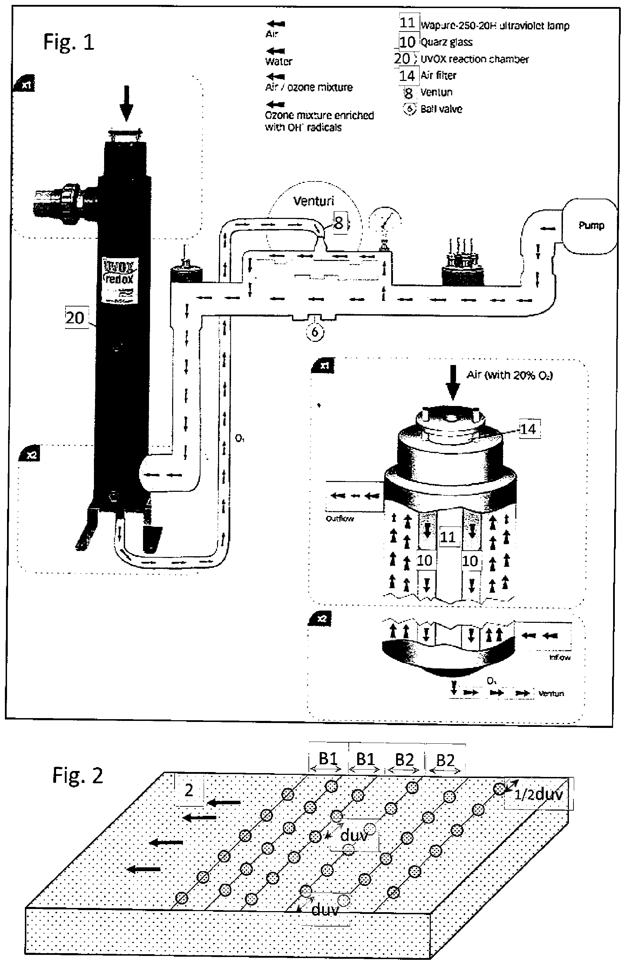

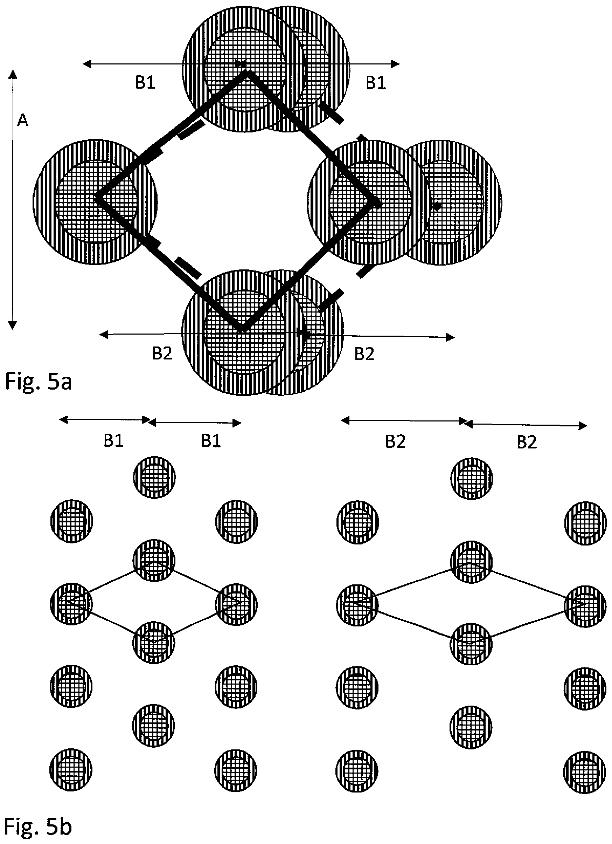

Fig. 1-5a,b show schematics of the present system.

### DETAILED DESCRIPTION OF THE FIGURES

In the figures:
- 100: present system
- 1: mechanical filter
- 2: treatment chamber
- 3: moveable bank
- 4: flex bank
- 5: rack
- 6: ball valve
- 7: spring
- 8: Venturi
- 9: common air block
- 10: quartz tube
- 11: UVOX lamps
- 12: air/ozone tube
- 13: pump
- 14: air filter
- 19: water removal pump
- 20: UVOX reaction chamber
- 21: guider
- dᵤᵥ: mutual distance between lamps
- B: distance between racks

In fig. 1 a working principle of the present UVOX lamp is shown. Water flows in from a right side into the UVOX system and leaves the system at a top left side. Air is provided on a top side of the UVOX system and leaves the system at a bottom side. The air, now comprising ozone, is fed into water to be treated, using an injector, such as a Venturi. Pumps and the like may be provided. In the right lower corner details of the UVOX system are shown, with a quartz glass tube 10 and a 250 UV lamp 11.

In fig. 2 a top view of the present system is shown, with lamp placed at a mutual distance dᵤᵥ and rack at a distance B which latter may be varied. One type of rack is used, being placed in a first position, and up-side down in the second position. One of the UV-lamps is at a distance ½ dᵤᵥ from a side.

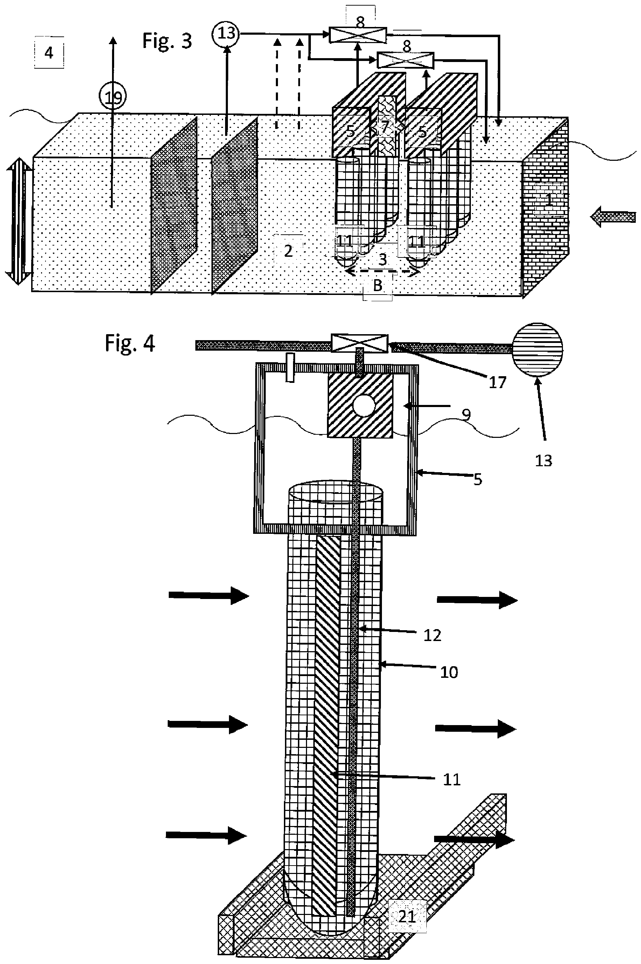

In fig. 3 the to be purified water flows, without a pump, via a mechanical filter system 1 in treatment chamber 2. The water level is best kept constant. In an alternative the flex bank 4 may be installed floating on water (virtually indicated by the vertical double arrow). At a side of the flex bank guiding elements may be provided for guiding the flex bank in a vertical direction. The flex bank 4 consists of horizontally moveable banks 3, in which racks 5 of UVOX lamps are placed. In each rack 5 a number of UVOX lamps are placed vertically, depending on the UV transmission: for example 6 UVOX lamps at a mutual distance A. In bank 4, a certain number of racks 5 can be placed one after the other, alternately, so that the power (or intensity) of UVOX lamps be controlled, such as depending on a calibration value obtained by using a series of water samples, and comparing said calibration value by an actually obtained value. The power may be varied simultaneously, such as by placing springs 7 between all the racks, which can be pushed apart or pressed together.

Each rack 5 operates independently and is controlled electrically and jointly, such as with supply water for the venturi 8 and pump 13. The supply of the air/water mixture is controlled by pump 13 and kept constant at a predetermined pressure, for venturi 8 by a frequency controlled supply of this pump to pressure. Also a water discharge pump 19 is shown.

In fig. 4 it is shown that each UVOX lamp consists of a Quartz tube 10, an UV Lamp 11 and an Air/ozone tube 12. Each rack 5 contains a common ozone/air block 9, a Venturi 8 with a connection block, an electric power supply box, an electronic measuring and control box possibly with UV detector. Further a guider 21 is shown for substantially maintaining lamp 11 in a horizontal position and allowing movement in a direction parallel to a surface thereof. A typical height of the lamp may be 790 mm.

In fig. 5a movement of lamps in a scissor like manner is shown, wherein distance A remains the same, and distance B varies between B1 and B2. Fig. 5b shows the same movement for three rows of lamps, each row having 4 lamps as example.

The figures have been detailed throughout the description.

## Claims

1. Liquid treatment system comprising
a treatment chamber (2) and a liquid inlet and a liquid outlet connected to said treatment chamber,
a guiding unit,
at least two racks (5), comprising a series of n ultraviolet lamp units, where n is equal to or more than 2, disposed in said treatment chamber, which series of ultraviolet lamps are each individually arranged in parallel planes and are connected to one and another in said plane,
wherein each rack is individually movable over the guiding unit perpendicular to each plane thereby increasing or decreasing a distance dₛ between two series,
wherein a distance dᵤᵥ between two adjacent ultraviolet lamp units in a series is substantially constant,
wherein a first ultraviolet lamp unit in a first series is located at a distance dᵤᵥ from a side of the treatment chamber and wherein an n^{th} ultraviolet lamp unit in the first series is located at a distance 1/2*dᵤᵥ from an opposite side of the treatment chamber,
wherein a first ultraviolet lamp unit in a series adjacent to the first series is located at a distance 1/2*dᵤᵥ from a side of the treatment chamber and wherein an n^{th} ultraviolet lamp unit in the adjacent series is located at a distance dᵤᵥ from an opposite side of the treatment chamber,
and wherein at least one ultraviolet lamp unit is for generating UV-light of a first wavelength for killing microorganisms and for generating UV-light of a second wavelength for providing ozone,
wherein series of ultraviolet lamps are each individually arranged in parallel planes substantially perpendicular to a wall of said treatment chamber,
wherein the series of ultraviolet lamps are placed in a rack (5),
wherein each series comprises at least one ultraviolet lamp unit for generating UV-light of a first wavelength for killing microorganisms and for generating UV-light of a second wavelength for providing ozone,
wherein a UV lamp unit comprises a transparent tube (10) closed at a bottom side thereof, a UV-lamp (11) for generating the first and second wavelength located in the tube (10),
*wherein for at least one UV lamp unit an intensity of the first wavelength for killing microorganisms is adaptable between 0-100% of a maximum power capacity, and*/*or an intensity of the second wavelength for providing ozone is adaptable between 0-100% of a maximum power capacity,* an inner tube (12) located in the tube (10) close to the UV-lamp (11) for providing flow of a fluid, an injector (8) in fluid connection with the inner tube (12), the injector (8) comprising a fluid exit for directing ozone rich gas to the to be treated liquid,
*wherein UV-lamp units are provided in a substantially vertical mode.*

2. System according to claim 1, wherein the guiding unit comprises at least one rail, preferably two rails.

3. System according to any of claims 1-2, wherein each rack comprises a fixator for fixing the rack to the guiding unit.

4. System according to any of claims 1-3, wherein each series comprises 2-n lamp units, preferably 3-n lamp units.

5. System according to any of claims 1-4 comprising a driver for moving the series with respect to each, such as a mechanical driver, a pneumatic driver, and a hydraulic driver.

6. System according to any of claims 1-*5*, wherein at least one of a bank and a rack comprises a second guiding unit for vertical movement, wherein the bank or rack is loosely attached to the second guiding unit such that the bank or rack may float in the liquid.

7. System according to any of claims 1-*6*, wherein the first wavelength for killing microorganisms is 254±20 nm, and/or the second wavelength for providing ozone is 185120 nm.

8. System according to any of claims 1-*7*, comprising at least one hydrogen peroxide provision unit.

9. System according to any of claims 1-*8*, wherein a UV lamp unit comprises a transparent quartz tube (10), a UV-lamp (11) centrally located, an inner tube (12) for providing flow of air, and a Venturi (8).

10. System according to claim *9*, wherein the UV lamp unit further comprises a common air block (9) in fluid connection with adjacent UV lamp units of a series of lamp units.

11. System according to any of claims 1-*10* comprising at least one of an electrical power supply, an electronic control unit, and a UV-intensity detector.

12. System according to any of claims 1-*11*, wherein the series are placed in a rack (5).

13. System according to any of claims 1-*12*, wherein the system comprises a filter system (1).

14. System according to any of claims 1-*13*, wherein the liquid to be treated is contaminated water.

15. Use of a system according to any of claims 1-*14*, for the treatment of water, such as of contaminated or waste water, wherein water is provided in an amount of 50-1000 m³/h.

## Patentansprüche

1. System zur Flüssigkeitsbehandlung mit
einer Behandlungskammer (2) und einem Flüssigkeitseinlass und einem Flüssigkeitsauslass, die mit der Behandlungskammer verbunden sind,
eine Führungseinheit,
mindestens zwei Gestelle (5), die eine Reihe von n Ultraviolettlampeneinheiten umfassen, wobei n gleich oder größer als 2 ist, die in der Behandlungskammer angeordnet sind, wobei die Reihen von Ultraviolettlampen jeweils einzeln in parallelen Ebenen angeordnet und in der Ebene miteinander verbunden sind,
wobei jedes Gestell einzeln über die Führungseinheit senkrecht zu jeder Ebene beweglich ist, wodurch ein Abstand dₛ zwischen zwei Reihen vergrößert oder verkleinert wird wobei ein Abstand dᵤᵥ zwischen zwei benachbarten Ultraviolettlampeneinheiten in einer Reihe im Wesentlichen konstant ist,
wobei eine erste Ultraviolettlampeneinheit in einer ersten Serie in einem Abstand dᵤᵥ von einer Seite der Behandlungskammer angeordnet ist und wobei eine n^{-te} Ultraviolettlampeneinheit in der ersten Serie in einem Abstand 1/2*dᵤᵥ von einer gegenüberliegenden Seite der Behandlungskammer angeordnet ist, wobei eine erste Ultraviolettlampeneinheit in einer Reihe neben der ersten Reihe in einem Abstand 1/2*dᵤᵥ von einer Seite der Behandlungskammer angeordnet ist und wobei eine n^{-te} Ultraviolettlampeneinheit in der benachbarten Reihe in einem Abstand von einer gegenüberliegenden Seite der Behandlungskammer angeordnet ist,
und wobei mindestens eine Ultraviolettlampeneinheit zur Erzeugung von UV-Licht einer ersten Wellenlänge zum Abtöten von Mikroorganismen und zur Erzeugung von UV-Licht einer zweiten Wellenlänge zur Bereitstellung von Ozon dient,
wobei Serien von Ultraviolettlampen jeweils einzeln in parallelen Ebenen im Wesentlichen senkrecht zu einer Wand der Behandlungskammer angeordnet sind,
wobei die Reihen von ultravioletten Lampen in einem Gestell (5) angeordnet sind,
wobei jede Reihe mindestens eine Ultraviolettlampeneinheit zur Erzeugung von UV-Licht einer ersten Wellenlänge zum Abtöten von Mikroorganismen und zur Erzeugung von UV-Licht einer zweiten Wellenlänge zur Bereitstellung von Ozon umfasst,
wobei eine UV-Lampeneinheit eine transparente Röhre (10), die an ihrer Unterseite geschlossen ist, und eine UV-Lampe (11) zur Erzeugung der ersten und zweiten Wellenlänge umfasst, die in der Röhre (10) angeordnet ist,
wobei für mindestens eine UV-Lampeneinheit eine Intensität der ersten Wellenlänge zum Abtöten von Mikroorganismen zwischen 0-100% einer maximalen Leistungskapazität anpassbar ist und/oder eine Intensität der zweiten Wellenlänge zum Bereitstellen von Ozon zwischen 0-100% einer maximalen Leistungskapazität anpassbar ist, eine innere Röhre (12), die in der Röhre (10) nahe der UV-Lampe (11) angeordnet ist, um einen Fluss eines Fluids bereitzustellen, einen Injektor (8) in Fluidverbindung mit der inneren Röhre (12), wobei der Injektor einen Fluidausgang umfasst, um ozonreiches Gas zu der zu behandelnden Flüssigkeit zu leiten,
wobei die UV-Lampeneinheiten im Wesentlichen vertikal angeordnet sind.

2. System nach Anspruch 1, wobei die Führungseinheit mindestens eine Schiene, vorzugsweise zwei Schienen, umfasst.

3. System nach einem der Ansprüche 1 bis 2, wobei jedes Gestell einen Befestiger zur Befestigung des Gestells an der Führungseinheit umfasst.

4. System nach einem der Ansprüche 1-3, wobei jede Serie 2-n Lampeneinheiten, vorzugsweise 3-n Lampeneinheiten, umfasst.

5. System nach einem der Ansprüche 1-4, das einen Antrieb zum Bewegen der Serien zueinander umfasst, wie z.B. einen mechanischen Antrieb, einen pneumatischen Antrieb und einen hydraulischen Antrieb.

6. System nach einem der Ansprüche 1-5, wobei mindestens eine Bank oder ein Gestell eine zweite Führungseinheit zur vertikalen Bewegung umfasst, wobei die Bank oder das Gestell lose an der zweiten Führungseinheit befestigt ist, so dass die Bank oder das Gestell in der Flüssigkeit schwimmen kann.

7. System nach einem der Ansprüche 1-6, wobei die erste Wellenlänge zum Abtöten von Mikroorganismen 254120 nm beträgt und/oder die zweite Wellenlänge zur Bereitstellung von Ozon 185120 nm beträgt.

8. System nach einem der Ansprüche 1-7, umfassend mindestens eine Einheit zur Bereitstellung von Wasserstoffperoxid.

9. System nach einem der Ansprüche 1-8, wobei eine UV-Lampeneinheit eine transparente Quarzröhre (10), eine zentral angeordnete UV-Lampe (11), eine innere Röhre (12) zur Bereitstellung eines Luftstroms und ein Ventil (8) umfasst.

10. System nach Anspruch 9, wobei die UV-Lampeneinheit ferner einen gemeinsamen Luftblock (9) umfasst, der in Fluidverbindung mit benachbarten UV-Lampeneinheiten einer Reihe von Lampeneinheiten steht.

11. System nach einem der Ansprüche 1-10, das mindestens eines der folgenden Elemente umfasst: eine elektrische Stromversorgung, eine elektronische Steuereinheit und einen UV-Intensitätsdetektor.

12. System nach einem der Ansprüche 1-11, wobei die Serien in einem Gestell (5) untergebracht sind.

13. System nach einem der Ansprüche 1-12, wobei das System ein Filtersystem (1) umfasst.

14. System nach einem der Ansprüche 1-13, wobei die zu behandelnde Flüssigkeit kontaminiertes Wasser ist.

15. Verwendung eines Systems nach einem der Ansprüche 1-14 zur Behandlung von Wasser, beispielsweise von kontaminiertem Wasser oder Abwasser, wobei Wasser in einer Menge von 50-1000 m³/h bereitgestellt wird.

## Revendications

1. Système de traitement de liquide comprenant
une chambre de traitement (2) et une entrée de liquide et une sortie de liquide connectées à ladite chambre de traitement,
une unité de guidage,
au moins deux râteliers (5) comprenant une série de n unités de lampes à ultraviolets, où n est égal ou supérieur à 2, disposés dans ladite chambre de traitement, lesquelles séries de lampes à ultraviolets sont chacune individuellement disposées en plans parallèles et sont connectées les unes aux autres dans ledit plan,
dans lequel chaque râtelier est individuellement mobile sur l'unité de guidage perpendiculaire à chaque plan, ce qui ainsi augmente ou diminue la distance dₛ entre deux séries,
dans lequel la distance entre deux unités de lampes à ultraviolets adjacentes dans une série est pratiquement constante,
dans lequel une première unité de lampe à ultraviolets dans une première série est située à une distance dᵤᵥ à partir d'un côté de la chambre de traitement et dans lequel une n^{ième} unité de lampe à ultraviolets dans la première série est située à une distance de 1/2*dᵤᵥ à partir d'un côté opposé de la chambre de traitement,
dans lequel une première unité de lampe à ultraviolets dans une série adjacente à la première série est située à une distance de 1/2*dᵤᵥ à partir d'un côté de la chambre de traitement et dans lequel une n^{ième} unité de lampe à ultraviolets dans la série adjacente est située à une distance dᵤᵥ à partir d'un côté opposé de la chambre de traitement,
et dans lequel au moins une unité de lampe à ultraviolets est destinée à générer une lumière UV ayant une première longueur d'onde pour tuer des microorganismes et à générer une lumière UV ayant une deuxième longueur d'onde pour délivrer de l'ozone, dans lequel les séries de lampes à ultraviolets sont chacune individuellement disposées en plans parallèles pratiquement perpendiculaires à une paroi de ladite chambre de traitement, dans lequel les séries de lampes à ultraviolets sont placées dans un râtelier (5),
dans lequel chaque série comprend au moins une unité de lampe à ultraviolets destinée à générer une lumière UV ayant une première longueur d'onde pour tuer des microorganismes et à générer une lumière UV ayant une deuxième longueur d'onde pour délivrer de l'ozone,
dans lequel une unité de lampe UV comprend un tube transparent (10) fermé au niveau de son côté de fond, une lampe UV (11) pour générer les première et deuxième longueurs d'onde située dans le tube (10),
dans lequel, pour au moins une unité de lampe UV, l'intensité de la première longueur d'onde pour tuer des microorganismes est adaptable entre 0 et 100 % de la capacité de puissance maximale, et/ou l'intensité de la deuxième longueur d'onde pour délivrer de l'ozone est adaptable entre 0 et 100 % de la capacité de puissance maximale,
un tube intérieur (12) situé dans le tube (10) proche de la lampe UV (11) pour délivrer un écoulement d'un fluide, un injecteur (8) en connexion de fluide avec le tube intérieur (12), l'injecteur comprenant une sortie de fluide pour diriger un gaz riche en ozone vers le liquide devant être traité,
dans lequel des unités de lampe UV sont présentes selon un mode pratiquement vertical.

2. Système selon la revendication 1, dans lequel l'unité de guidage comprend au moins un rail, de préférence deux rails.

3. Système selon l'une quelconque des revendications 1 et 2, dans lequel chaque râtelier comprend un dispositif de fixation pour fixer le râtelier à l'unité de guidage.

4. Système selon l'une quelconque des revendications 1-3, dans lequel chaque série comprend 2-n unités de lampes, de préférence 3-n unités de lampes.

5. Système selon l'une quelconque des revendications 1-4, comprenant un dispositif d'entraînement pour déplacer les séries les unes par rapport aux autres, tel qu'un dispositif d'entraînement mécanique, un dispositif d'entraînement pneumatique, ou un dispositif d'entraînement hydraulique.

6. Système selon l'une quelconque des revendications 1-5, dans lequel au moins l'un parmi un banc et un râtelier comprend une deuxième unité de guidage pour mouvement vertical, dans lequel le banc ou râtelier est attaché de façon lâche à la deuxième unité de guidage de façon que le banc ou le râtelier puisse flotter dans le liquide.

7. Système selon l'une quelconque des revendications 1-6, dans lequel la première longueur d'onde pour tuer des microorganismes est de 254 ± 20 nm, et/ou la deuxième longueur d'onde pour délivrer de l'ozone est de 185 ± 20 nm.

8. Système selon l'une quelconque des revendications 1-7, comprenant au moins une unité de fourniture de peroxyde d'hydrogène.

9. Système selon l'une quelconque des revendications 1-8, dans lequel une unité de lampe UV comprend un tube de quartz transparent (10), une lampe UV (11) disposée au centre, un tube intérieur (12) pour délivrer un courant d'air, et un venturi (8) .

10. Système selon la revendication 9, dans lequel l'unité de lampe UV comprend en outre un dispositif anti-retour d'air commun (9) en connexion de fluide avec des unités de lampes UV adjacentes d'une série d'unités de lampes.

11. Système selon l'une quelconque des revendications 1-10, comprenant au moins l'un parmi une alimentation électrique, une unité de commande électronique, et un détecteur d'intensité UV.

12. Système selon l'une quelconque des revendications 1-11, dans lequel les séries sont placées dans un râtelier (5).

13. Système selon l'une quelconque des revendications 1-12, lequel système comprend un système de filtration (1).

14. Système selon l'une quelconque des revendications 1-13, dans lequel le liquide devant être traité est une eau contaminée.

15. Utilisation d'un système selon l'une quelconque des revendications 1 à 14, pour le traitement d'une eau, telle qu'une eau contaminée ou résiduaire, dans laquelle l'eau est délivrée en une quantité de 50 à 1000 m³/h.
